# EUROPÄISCHE PATENTANMELDUNG

(11) **EP 3 988 438 A1**
(43) Veröffentlichungstag der Anmeldung: **27.04.2022**
(21) Anmeldenummer: 21197678.2
(22) Anmeldetag: 20.09.2021
(51) Int. Cl.: B63B 3/68, B29C 33/10, B29C 70/08

(54) **ISOLIERPANEEL, VORRICHTUNG ZUR HERSTELLUNG EINES ISOLIERPANEELS UND HERSTELLUNGSVERFAHREN**

(30) Priorität: 30.09.2020 DE 102020125530
(71) Anmelder: Kögel Trailer GmbH, 89349 Burtenbach (DE)
(72) Erfinder: Pröbstle, Roman, 89359 Kötz (DE)
(74) Vertreter: Kilchert, Jochen

(57) **Zusammenfassung**

Die vorliegende Erfindung betrifft ein Isolierpaneel (10) für einen Fahrzeugaufbau, insbesondere Kühlfahrzeugaufbau, mit wenigstens einer wärmedämmenden, insbesondere ausgeschäumten, Kernschicht (11), wenigstens zwei Deckschichten (12) aus jeweils wenigstens einer Folie (13), insbesondere Kunststofffolie (13'), und wenigstens zwei Zwischenschichten (14), die jeweils durch wenigstens eine Faserlage in einem ausgehärteten Kunststoffmaterial gebildet sind, wobei die Zwischenschichten (14) jeweils zwischen der wärmedämmenden Kernschicht (11) und der jeweiligen Deckschicht (12) einander gegenüber angeordnet sind, wobei die Zwischenschichten (14) die Kernschicht (11) mit den Deckschichten (12) durch eine Pressverbindung fest, insbesondere unlösbar verbindet. Ferner betrifft die Erfindung eine Vorrichtung und ein Herstellungsverfahren.

## Beschreibung

Die Erfindung betrifft ein Isolierpaneel, eine Vorrichtung zur Herstellung eines Isolierpaneels und ein Verfahren zur Herstellung eines Isolierpaneels. Ein Isolierpaneel gemäß dem Oberbegriff des Patentanspruchs 1 ist beispielsweise aus WO 2010/108615 A1 bekannt.

Im Nutzfahrzeugbau werden üblicherweise Metalldeckplatten zur Herstellung von Isolierpaneelen verwendet, die parallel und mit einem Zwischenraum angeordnet werden. In den Zwischenraum wird eine Flüssigkeit eingebracht und zur Bildung einer Dämmschicht aufgeschäumt. Die Herstellung geschäumter Isolierpaneele ist aufwendig und kostenintensiv, da der Schaum die im Zwischenraum enthaltene Luft verdrängen und diesen ausfüllen muss. Überdies bestehen Einschränkungen hinsichtlich der Form und Größe der so gefertigten Isolierpaneele. Ein derartiges Isolierpaneel ist beispielsweise aus der eingangs genannten WO 2010/108615 A1 bekannt.

Eine weitere Möglichkeit zur Herstellung von Isolierpaneelen sind geklebte Paneele, bei denen vorgefertigte Dämmschichten und Decklagen verklebt werden. Auch hier unterliegen die Form und Größe der Isolierpaneele Einschränkungen. Ferner erfordern beide Arten der Herstellung erhöhte Wartezeiten beispielsweise durch die Ausschäumung des Zwischenraums bzw. die Aushärtung der Klebeverbindung.

Ein weiteres Herstellungsverfahren für Isolierpaneele ist beispielsweise das Nassin-Nass-Verfahren, bei dem Glasfasermatten in Harz eingelegt, mit Harz bepinselt oder getränkt und anschließend ausgehärtet werden. Dabei werden Glasfasermatten per Hand Schicht für Schicht solange aufeinander angeordnet, bis eine geforderte Schichtdicke einer ersten Deckschicht erreicht ist. Danach wird ein Schaumkern aufgelegt und anschließend die zweite Deckschicht entsprechend der ersten ausgebildet. Mit diesem Verfahren können zwar Isolierpaneele mit erhöhter Qualität hergestellt werden. Dies ist aber sehr zeitaufwendig und daher mit hohen Kosten verbunden. Des Weiteren besteht der Nachteil der mangelnden Automatisierbarkeit.

Der Erfindung liegt die Aufgabe zu Grunde, ein Isolierpaneel anzugeben, das ein geringes Gewicht bei hoher Stabilität aufweist und einfach herzustellen ist. Der Erfindung liegt ferner die Aufgabe zu Grunde eine Vorrichtung zur Herstellung eines Isolierpaneels sowie ein Verfahren zur Herstellung eines Isolierpaneels anzugeben.

Erfindungsgemäß wird diese Aufgabe im Hinblick auf das Isolierpaneel durch den Gegenstand des Anspruchs 1 gelöst. Hinsichtlich der Vorrichtung und des Verfahrens wird die vorstehend genannte Aufgabe jeweils durch den Gegenstand des Anspruchs 4 (Vorrichtung) und des Anspruchs 8 (Verfahren) gelöst.

Konkret wird die Aufgabe durch ein Isolierpaneel für einen Fahrzeugaufbau, insbesondere Kühlfahrzeugaufbau, mit wenigstens einer wärmedämmenden, insbesondere geschäumten, Kernschicht, wenigstens zwei Deckschichten aus jeweils wenigstens einer Folie, insbesondere Kunststofffolie, und wenigstens zwei Zwischenschichten gelöst, die jeweils durch wenigstens eine Faserlage in einem ausgehärteten Kunststoffmaterial gebildet sind. Die Zwischenschichten sind jeweils zwischen der wärmedämmenden Kernschicht und der jeweiligen Deckschicht einander gegenüber angeordnet. Die Zwischenschichten verbinden die Kernschicht mit den Deckschichten durch eine Pressverbindung fest, insbesondere unlösbar.

Die Erfindung hat verschiedene Vorteile. Durch die Ausbildung der Zwischenschichten aus der wenigstens einer Faserlage in dem ausgehärteten Kunststoffmaterial und den Deckschichten als Folien weist das Isolierpaneel im Unterschied zu herkömmlichen Isolierpaneelen beispielsweise mit metallischen Deckschichten vorteilhaft ein sehr geringes Gewicht auf. Insbesondere bei der Anwendung des Isolierpaneels an Fahrzeugaufbauten, insbesondere Kühlfahrzeugaufbauten, wird dadurch ein verringertes Fahrzeugleergewicht erreicht, sodass eine erhöhte Zuladung und CO2-Einsparungen beim Fahrbetrieb ermöglicht sind.

Die Folien als Deckschichten haben den weiteren Vorteil, dass diese je nach Kundenwunsch und Bedarf farbig herstellbar sind. Ferner sind die Folien einfach bedruckbar. Es ist möglich, dass die Folien mit einer weiteren Folie beschichtet, insbesondere foliert werden können.

Die Zwischenschichten bilden jeweils eine faserverstärkte Schicht, die die Folie mit der Kernschicht verbindet. Die jeweilige Zwischenschicht ist dazu ausgebildet, die Deckschicht bzw. die Folie mit der Kernschicht fest zu verbinden. Dazu steht das ausgehärtete Kunststoffmaterial der Zwischenschicht einerseits mit der Folie in Kontakt und andererseits mit der Kernschicht. Mit anderen Worten durchdringt die ausgehärtete Kunststoffschicht die Faserlage derart, dass die Folie und die Kernschicht durch das ausgehärtete Kunststoffmaterial der Zwischenschicht, insbesondere unlösbar, verbunden sind. Mit anderen Worten hält das ausgehärtete Kunststoffmaterial die jeweilige Folie an der Kernschicht.

Die feste Verbindung der Folien mit der Kernschicht wird durch ein Verpressen der Kernschicht mit den Zwischenschichten und den Folien hergestellt. Die einzelnen Schichten werden derart miteinander verpresst, dass das bei dem Pressvorgang flüssige Kunststoffmaterial, insbesondere Polyurethan, in die Struktur Kernschicht zumindest teilweise fließt bzw. an der Struktur der Folien anhaftet und so nach dem Aushärten des flüssigen Kunststoffmaterials eine formschlüssige und/oder stoffschlüssige Verbindung zwischen der Zwischenschicht und den Fügepartnern ausbildet. Das ausgehärtete Kunststoffmaterial kann in die Struktur der Folie und/oder die Struktur der Kernschicht eingreifen und die jeweiligen Fügepartner verkleben. Die Pressverbindung ist bevorzugt durch eine Kombination aus Formschluss- und Stoffschlussverbindung gebildet. Das ausgehärtete Kunststoffmaterial bildet einen Verbundstoff.

Zusätzlich können einzelne, insbesondere abstehende, Fasern der Faserlage in die Kernschicht eindringen, sodass die Zwischenschicht in die Kernschicht zumindest teilweise eingreift, insbesondere einhakt.

Das flüssige Kunststoffmaterial liegt beim Pressvorgang an der Folie zumindest flächig an. Die Folie kann eine behandelte bzw. bearbeitet Oberfläche aufweisen, an der das flüssige Kunststoffmaterial anhaftet. Die Oberfläche kann somit verbesserte Hafteigenschaften aufweisen.

Bevorzugt sind die Deckschichten jeweils durch eine einzige Folie gebildet. Dadurch wird die Herstellung des Isolierpaneels vereinfacht sowie Materialkosten reduziert. Alternativ können die Deckschichten jeweils durch mehrere aufeinander angeordnete Folien gebildet sein. Bevorzugt sind die Folien elastisch verformbar, insbesondere dehnbar ausgebildet. Dies hat den Vorteil, dass die Folie in Kombination mit der Zwischenschicht federnde Eigenschaften aufweist und somit eine Dellenbildung bei Beschädigung verringert wird.

Die Folie kann aus Kunststoff gebildet sein. Bevorzugt ist die Folie eine Kunststofffolie aus Polyurethan. Alternativ kann die Folie aus Metall sein. Als Deckschicht ist auch ein Folienverbund aus mehreren Kunststofffolien und/oder Metallfolien möglich.

Bei der Herstellung der jeweiligen Zwischenschicht wird die Faserlage mit dem Kunststoffmaterial in flüssigem Zustand benetzt, um die Faserlage mit dem flüssigen Kunststoffmaterial zu tränken. Nach einem Aushärtevorgang bildet die Faserlage zusammen mit dem ausgehärteten Kunststoffmaterial die Zwischenschicht, wobei die Faserlage und das ausgehärtete Kunststoffmaterial eine Einheit bilden.

Im Rahmen der Erfindung ist die Faserlage als Lage zu verstehen, die aus wenigstens einem flächigen, insbesondere dünnen, Element aus Fasern gebildet ist. Die Faserlage kann aus einem einzelnen flächigen Element oder mehrere übereinander angeordnete flächigen Elementen gebildet sein. Als Fasern können Glasfasern und/oder Karbonfasern zum Einsatz kommen.

Eine derartige Faserlage hat den Vorteil, dass die einzelnen Fasern, aus denen die flächigen Elemente der Faserlage gebildet sind, bei der Herstellung der Faserlage entsprechend ausgerichtet werden können. Die Fasern können beispielsweise vorwiegend parallel zur zugeordneten Folie verlaufen. Dadurch liegen die Fasern beim Verpressen der Deckschicht mit der Zwischenschicht größtenteils länglich an der Folie an, sodass ein Durchstechen der Folie durch die einzelnen Faserspitzen verhindert wird.

Im Rahmen der Erfindung ist die Kernschicht eine wärmedämmende, zentrale Schicht in der Form eines Halbzeugs. Mit anderen Worten wird die Kernschicht vor der Bildung des Isolierpaneels vorgefertigt. Die Kernschicht ist vorzugsweise durch ein flächiges Volumenelement gebildet.

Das erfindungsgemäße Isolierpaneel ist als Sandwichpaneel aufgebaut, wobei das Isolierpaneel von außen nach innen in der Reihenfolge Deckschicht, Zwischenschicht und Kernschicht ausgebildet ist. Mit anderen Worten ist die Kernschicht zwischen den beiden Zwischenschichten angeordnet, wobei jeweils eine der Deckschichten an eine der Zwischenschichten angeordnet ist. Die jeweilige Zwischenschicht ist zwischen der Kernschicht und der Deckschicht bzw. der Folie angeordnet. Das Isolierpaneel weist eine erhöhte Stabilität, eine verbesserte Schlagzähigkeit sowie eine erhöhte Festigkeit auf. Dies hat den Vorteil, dass das Isolierpaneel beim Einsatz im Freien eine verringerte Anfälligkeit für Hagelschäden aufweist.

Das erfindungsgemäße Isolierpaneel weist ferner eine geringe Längenausdehnung bei Temperaturunterschieden auf, das beispielsweise bei einem Einsatz in Kühlfahrzeugaufbauten von Vorteil ist.

Bevorzugte Ausführungsformen der Erfindung sind in den Unteransprüchen angegeben.

Bei einer besonders bevorzugten Ausführungsform ist die Faserlage in das ausgehärtete Kunststoffmaterial durch Verpressen der einzelnen Schichten eingebettet ist. Mit anderen Worten kann die Faserlage der jeweiligen Zwischenlage in das ausgehärtete Kunststoffmaterial integriert sein. Die Faserlage kann mit dem ausgehärteten Kunststoffmaterial zumindest teilumschlossen in der Zwischenschicht angeordnet sein. Die Faserlage ist bevorzugt mit dem ausgehärteten Kunststoffmaterial in der Zwischenschicht vollständig umschlossen.

Das ausgehärtete Kunststoffmaterial verfestigt die Faserlage in ihrer Form, sodass das Isolierpaneel eine erhöhte, insbesondere seitliche, Stabilität aufweist. Beim Pressen der einzelnen Schichten zur Bildung des Isolierpaneels wird die Faserlage mit dem noch flüssigen Kunststoffmaterial durchtränkt, sodass die Faserlage nach dem Aushärten in dem Kunststoffmaterial fest, insbesondere fixiert, angeordnet ist. Die Faserlage kann in einem der Folie zugewandten Bereich eingebettet sein oder in dem ausgehärteten Kunststoffmaterial zentral eingebettet sein.

Bei einer bevorzugten Ausführungsform ist die Faserlage durch wenigstens eine Glasfasermatte gebildet und/oder das ausgehärtete Kunststoffmaterial aus Polyurethan gebildet. Mit anderen Worten kann die Faserlage wenigstens eine Glasfasermatte aufweisen. Die Faserlage kann auch mehrere Glasfasermatten aufweisen, die aneinander angeordnet sind. Die Glasfasermatte kann ein Gewebe aus Glasfasern sein und/oder aus einer Vielzahl von losen Glasfaser, die zu einer Matte gepresst sind, bestehen. Vorteilhaft ist hier, dass Schäden an dem Isolierpaneel, insbesondere der Zwischenschichten, einfach und schnell mittels Glasfaserspachtel per Hand repariert werden können und somit das Isolierpaneel nicht bei jedem Schaden ausgetauscht werden muss.

Alternativ oder zusätzlich kann die Faserlage durch wenigstens eine Karbonfasermatte gebildet sein.

Das ausgehärtete Kunststoffmaterial aus Polyurethan hat vorteilhaft verbesserte elastische Eigenschaften, sodass eine Dellenbildung bei Beschädigung des Isolierpaneels im Bereich der Deck- und Zwischenschicht reduziert wird. Bei einer Ausführungsform, bei der die Kernschicht, das ausgehärtete Kunststoffmaterial und die Folien aus Polyurethan ausgebildet sind, ist eine Recyclingfähigkeit verbessert. Beispielsweise können die Isolierpaneel nach dem Ende der Lebensdauer ohne großen Separieraufwand zerkleinert und weiterverarbeitet werden. Im Unterschied dazu, müssen die Bestandteile der aus dem Stand der Technik bekannten Isolierpaneele von Kühlfahrzeugaufbauten aufwändig getrennt werden, um Recycling zu ermöglichen.

Des Weiteren sind Polyurethan sowie die Glasfasermatten kostengünstig in der Anschaffung und weisen im Unterschied zu Metallwerkstoffen eine erhöhte Preisstabilität auf.

Bei einer bevorzugten Ausführungsform sind die Deckschichten jeweils durch wenigstens eine Mehrschichtfolie gebildet. Die einzelnen Schichten der Mehrschichtfolie sind vorzugsweise übereinander extrudiert. Die einzelnen Schichten der Mehrschichtfolie weisen bevorzugt als Basismaterial Polyurethan auf. Die einzelnen Schichten der Mehrschichtfolie weisen vorzugsweise unterschiedliche Materialeigenschaften, wie beispielsweise UV-Beständigkeit, Farbechtheit und/oder Kratzfestigkeit auf. Die Schichten können zusätzlich zu dem Polyurethan als Basismaterial wenigstens ein Zusatzmaterial, insbesondere einen Zusatzstoff, enthalten, um die vorstehend genannten Materialeigenschaften aufzuweisen. Die Einzelschichten sind nicht auf die vorgenannten Eigenschaften eingeschränkt.

Bei dieser Ausführungsform ist vorteilhaft, dass die verschiedenen Materialeigenschaften der Mehrschichtfolie auf unterschiedliche Folienschichten aufgeteilt sind. Im Vergleich zu einer Deckschicht aus einer Folie mit einer einzigen Folienschicht weist die Mehrschichtfolie zwar eine erhöhte Dicke auf, jedoch ist die Mehrschichtfolie generell günstiger in der Herstellung.

Bei der Herstellung der Mehrschichtfolie werden die einzelnen Folienschichten direkt übereinander extrudiert. Dies kann durch eine Extrusionsanlage erfolgen, in der die verschiedenen Materialschmelzströme zur Bildung der Mehrschichtfolie aneinander geführt und untrennbar übereinander extrudiert werden. Bevorzugt besteht die Mehrschichtfolie aus wenigstens zwei Schichten. Die Mehrschichtfolie kann aus drei oder vier übereinander extrudierten Schichten gebildet sein. Weitere Varianten des Folienaufbaus hinsichtlich der Schichtanzahl sind möglich.

Die Mehrschichtfolie kann generell auch als mehrlagige Folie bezeichnet werden, wobei die einzelnen Schichten unterschiedliche Folienlagen bilden.

Bei einer weiteren bevorzugten Ausführungsform bilden die Deckschichten jeweils ausgehend von der wärmedämmenden Kernschicht nach außen, insbesondere quer zu einer Seitenfläche der Kernschicht, eine abschließende, insbesondere letzte, Schicht des Isolierpaneels. Dies hat den Vorteil, dass durch die Folien eine abschließende Lackierung bzw. ein Gelcoat des Isolierpaneels entfallen kann, da die Folien als Sichtfläche dienen. Dadurch werden Kosten sowie Lösemittelemissionen eingespart. Dennoch ist eine abschließende Lackierung der Folien nicht ausgeschlossen.

Die Kernschicht des Isolierpaneels kann einstückig, insbesondere einteilig, ausgebildet sein, d.h. aus wenigstens einem Kernschicht-Volumenelement gebildet sein. Mit anderen Worten kann die Kernschicht durch ein einziges Kernschicht-Volumenelement gebildet sein. Alternativ kann die Kernschicht aus mehreren zusammengesetzten Kernschicht-Volumenelementen, insbesondere geschäumten Kernschichtblöcken, gebildet sein. Mit anderen Worten kann die Kernschicht mehrteilig ausgebildet sein.

Die Kernschicht kann vielfältig ausgebildet sein. Beispielsweise kann die Kernschicht wenigstens eine Verstärkung, wenigstens eine Rippe, wenigstens eine Verbindungseinrichtung und/oder wenigstens eine Einformung aufweisen. Zusätzlich oder alternativ kann eine Einlage in die Kernschicht eingelegt sein oder in der Kernschicht ausgebildet sein. Die Einlage kann in die Kernschicht eingepresst sein.

Nach dem nebengeordneten Anspruch 4 betrifft die Erfindung eine Vorrichtung zur Herstellung eines Isolierpaneels, insbesondere eines erfindungsgemäßen Isolierpaneels, die wenigstens ein Presswerkzeug mit wenigstens einer Gegenform und wenigstens einem Pressteil umfasst. Die Gegenform weist wenigstens eine Ausnehmung zur Bildung des Isolierpaneels und das Pressteil wenigstens einen Pressbereich auf, der in einer ersten von wenigstens zwei Betriebsstellungen der Ausnehmung gegenüber angeordnet ist. Die Gegenform ist zwischen den beiden Betriebsstellungen horizontal bewegbar, um die Ausnehmung der Gegenform schichtweise zu bestücken. Das Pressteil ist vertikal bewegbar, um das Pressteil zur Bildung des Isolierpaneels gegen die Gegenform zu pressen. Die Vorrichtung kann auch als Presse bezeichnet werden.

Die Gegenform bildet jenen Teil des Presswerkzeugs gegen den das Pressteil beim Pressvorgang gepresst wird, um das Isolierpaneel unter Druckeinwirkung herzustellen. Die Ausnehmung der Gegenform definiert im Wesentlichen die Ausgestaltungsform des herzustellenden Isolierpaneels. Das Pressteil bildet mit dem Pressbereich einen Deckel, der beim Pressvorgang gegen die Gegenform, insbesondere in Richtung der Gegenform, gepresst wird und somit einen weiteren Teil der Ausgestaltungsform definiert.

Die Vorrichtung umfasst wenigstens zwei Betriebsstellungen, zwischen denen die Gegenform horizontal bewegbar ist. Die Gegenform kann auch als Pendelform ("Shuttle") bezeichnet werden. In der ersten Betriebsstellung befindet sich die Gegenform dem Pressbereich des Pressteils gegenüber. Die erste Betriebsstellung kann auch als Pressstellung bezeichnet werden. Das Pressteil ist horizontal fixiert, d.h. in horizontaler Richtung fest angeordnet. Das Pressteil ist in vertikaler Richtung bewegbar, sodass in der ersten Betriebsstellung der Pressvorgang zur Bildung des Isolierpaneels erfolgen kann.

Im Rahmen der Erfindung entspricht die vertikale Richtung einer Richtung, in die das Pressteil im Betrieb bewegt wird, um den Pressbereich gegen die Gegenform zu pressen. Die horizontale Richtung steht zur vertikalen Richtung orthogonal.

In der zweiten Betriebsstellung ist die Gegenform zu dem Pressteil horizontal, insbesondere seitlich, versetzt angeordnet, um die Ausnehmung der Gegenform mit Bestandteilen, insbesondere wenigstens einem Isolierkern und/oder wenigstens einer Faserlage oder wenigstens einem Kernschichtpaket aus einem Isolierkern und wenigstens einer Faserlage, des herzustellenden Isolierpaneels zu bestücken.

Die Gegenform ist somit zwischen den beiden horizontalen Betriebsstellungen verfahrbar. Dies hat den Vorteil, dass die Zugänglichkeit zur Bestückung der Gegenform erleichtert und somit ein Aufwand verringert wird. Des Weiteren weist die erfindungsgemäße Vorrichtung einen einfachen konstruktiven Aufbau auf, sodass die Herstellung eines Isolierpaneels vereinfacht ist.

Bei einer bevorzugten Ausführungsform der erfindungsgemäßen Vorrichtung weist das Presswerkzeug wenigstens ein Gegenstück auf, das als feststehendes Widerlager für die Gegenform ausgebildet ist und beim Pressvorgang die durch das Pressteil in die Gegenform eingeleiteten Presskräfte aufnimmt. Mit anderen Worten ist die Gegenform zumindest beim Pressvorgang vertikal abgestützt, um die Presskräfte aufzunehmen. Die Gegenform kann auf dem feststehenden Gegenstück, insbesondere Werkzeugtisch, des Presswerkzeugs aufliegen. Die Gegenform weist hier vorteilhaft eine Doppelfunktion auf, nämlich einerseits als ein die Form des Isolierpaneel definierendes Teil, d.h. als Form als Solche, und andererseits als Widerlager, d.h. als ein Bestandteil des Presswerkzeugs. Dadurch können weitere Bauteile der Presse eingespart werden, sodass eine Komplexität der Presse reduziert wird.

Bei einer weiteren bevorzugten Ausführungsform der erfindungsgemäßen Vorrichtung ist die Ausnehmung der Gegenform wannenförmig ausgebildet und bildet eine Negativform des zu bildenden Isolierpaneels. Die Ausnehmung der Gegenform kann zu einer Seite hin offen sein, die beim Pressvorgang durch den Pressbereich des Pressteils geschlossen ist. Die Ausnehmung bildet im Wesentlichen eine Endform des zu bildenden Isolierpaneels ab, wobei der Pressbereich des Pressteils im geschlossenen Zustand der Gegenform die Endform des Isolierpaneels vervollständigt. Mit anderen Worten bilden die Gegenform und der Pressbereich des Pressteils im geschlossenen Zustand des Presswerkzeugs die vollständige Endform des zu bildenden Isolierpaneels.

Durch die Wannenform der Ausnehmung wird das Bestücken bzw. das Einlegen der Bestandteile des Isolierpaneels vereinfacht und somit der Aufwand zur Herstellung des Paneels reduziert.

Bevorzugt sind die Gegenform und/oder das Pressteil einteilig ausgebildet. Alternativ ist möglich, dass die Gegenform und/oder das Pressteil mehrteilig ausgebildet sind.

Vorzugsweise weist die erfindungsgemäße Vorrichtung wenigstens eine Verteileinrichtung zum Aufbringen eines flüssigen Kunststoffmaterials, insbesondere Polyurethans, auf, die in horizontaler Richtung zwischen den beiden Betriebsstellungen der Gegenform angeordnet ist. Mit anderen Worten ist die Verteileinrichtung vorzugsweise im Übergang zwischen den beiden Betriebsstellungen angeordnet, sodass das flüssige Kunststoffmaterial in die Ausnehmung beim Wechsel der Gegenform zwischen den beiden Betriebsstellungen eingebracht werden kann. Vorzugsweise ist die Verteileinrichtung dazu ausgebildet, das flüssige Kunststoffmaterial gleichmäßig auf die in der Ausnehmung angeordneten Bestandteile des Isolierpaneels aufzubringen. Die Verteileinrichtung kann wenigstens eine Düse aufweisen, durch die das flüssige Kunststoffmaterial aufgebracht wird. Bevorzugt ist die Verteileinrichtung durch wenigstens ein Austragrohr gebildet.

Durch die Verteileinrichtung kann die Gegenform beim Wechsel zwischen den beiden Betriebsstellungen mit dem flüssigen Kunststoffmaterial zeitlich parallel bestückt werden, sodass die Bestückungsdauer insgesamt verkürzt wird.

Weiter vorzugsweise weist die erfindungsgemäße Vorrichtung wenigstens eine Entlüftungseinlage zum Abführen der beim Pressvorgang zwischen der Gegenform und dem Pressteil eingeschlossenen Luft auf, wobei die Entlüftungseinlage an einem an die Ausnehmung angrenzenden Rand der Gegenform angeordnet ist. Die Entlüftungseinlage ist luftdurchlässig ausgebildet. Im geschlossenen Zustand des Presswerkzeugs verbindet die Entlüftungseinlage die Ausnehmung der Gegenform mit der Außenatmosphäre, sodass eine Entlüftung beim Pressvorgang erfolgen kann.

Die Entlüftungseinlage besteht bevorzugt aus einem Material, dass luftdurchlässig ausgebildet ist. Die Entlüftungseinlage ist vorzugsweise durch eine Weichschaumeinlage gebildet. Die Entlüftungseinlage ist weiter bevorzugt flüssigkeitsabdichtend ausgebildet. Mit anderen Worten kann die Entlüftungseinlage eingeschlossene Luft bzw. Luftblasen passieren lassen, hält aber beispielsweise das flüssige Kunststoffmaterial beim Pressvorgang zurück. Dadurch wird eine verbesserte Entlüftung erreicht und somit der Einschluss von Luftblasen im Isolierpaneel sowie ein Materialverlust durch Rückhaltung verhindert.

Der Rand der Gegenform kann die Ausnehmung teilweise oder vollständig umrahmen. Der Rand kann von der Ausnehmung aus nach außen abstehend ausgebildet sein.

Bevorzugt ist die Entlüftungseinlage an dem Rand die Ausnehmung vollständig umlaufend angeordnet. Mit anderen Worten kann die Entlüftungseinlage als flächiges Einlageelement ausgebildet sein, das an dem Rand der Gegenform angeordnet ist. Die Entlüftungseinlage kann als Weichschaummatte ausgebildet sein. Alternativ dazu können mehrere Entlüftungseinlagen vorgesehen sein, die am Umfang der Ausnehmung verteilt angeordnet sind. Die Entlüftungseinlagen können gleichmäßig verteilt zwischen der Gegenform und dem Pressteil angeordnet sein. Die Entlüftungseinlagen können streifenförmig ausgebildet sein. Durch die umlaufende bzw. verteilte Anordnung der Entlüftungseinlage wird eine gleichmäßige und annähernd vollständige Entlüftung der Ausnehmung der Gegenform beim Pressvorgang erreicht. Dadurch können faltenfreie Isolierpaneele hergestellt werden. Diese weisen dadurch eine erhöhte Qualität auf.

Nach dem nebengeordneten Anspruch 8 betrifft die Erfindung ein Verfahren zur Herstellung eines Isolierpaneels, insbesondere eines erfindungsgemäßen Isolierpaneels, mit einer Vorrichtung, die ein Presswerkzeug mit wenigstens einer Gegenform und wenigstens einem Pressteil umfasst. Die Gegenform weist wenigstens eine Ausnehmung zur Bildung des Isolierpaneels auf. Das Verfahren umfasst folgende Schritte:
a) Anordnen wenigstens einer ersten Deckschicht, insbesondere einer Folie, in der Ausnehmung der Gegenform und Anordnen wenigstens einer zweiten Deckschicht, insbesondere einer Folie, an einem der Ausnehmung zugewandten Pressbereich des Pressteils.
b) Bedecken der ersten Deckschicht mit wenigstens einem flüssigen Kunststoffmaterial, insbesondere Polyurethan.
c) Einlegen wenigstens eines Kernschichtpakets aus einem Isolierkern mit beidseitig angeordneten Faserlagen in die Ausnehmung der Gegenform, sodass wenigstens die erste der beiden Faserlagen mit dem flüssigen Kunststoffmaterial in Kontakt steht.
d) Bedecken der zweiten der beiden Faserlagen mit dem flüssigen Kunststoffmaterial, insbesondere Polyurethan.
e) Pressen des Pressteils mit dem Pressbereich gegen die Gegenform, wobei das Kernschichtpaket mit dem flüssigen Kunststoffmaterial und den beiden Deckschichten zur Bildung des Isolierpaneels verpresst wird.

In Schritt e) werden die einzelnen Schichten derart miteinander verpresst, dass das flüssige Kunststoffmaterial, insbesondere Polyurethan, in die Struktur der Kernschicht zumindest teilweise fließt bzw. an die Struktur der Folie anhaftet und so eine formschlüssige und/oder stoffschlüssige Verbindung zwischen den Fügepartnern ausgebildet wird. Das Kunststoffmaterial kann in die Struktur der Folie und/oder der Kernschicht eingreifen und die jeweiligen Fügepartner miteinander verkleben. Die Pressverbindung ist somit bevorzugt durch eine Kombination aus Formschluss- und Stoffschlussverbindung gebildet. Das flüssige Kunststoffmaterial bildet einen Verbundstoff.

Generell kann das erfindungsgemäße Verfahren mit einer Vorrichtung der vorstehend genannten Art durchgeführt werden.

Die Anordnung der zweiten Deckschicht an dem Pressbereich des Pressteils in Schritt a) kann alternativ auch zu einem anderen Zeitpunkt, aber vor der Durchführung des Schritts e) erfolgen.

Bei einer bevorzugten Ausführungsform des erfindungsgemäßen Verfahrens wird in Schritt a) die erste Deckschicht an der Ausnehmung der Gegenform anliegend gehalten. Alternativ oder zusätzlich wird vorzugsweise in Schritt a) die zweite Deckschicht an dem Pressbereich des Pressteils anliegend gehalten. Mit anderen Worten wird die erste Deckschicht derart angeordnet, dass diese an einer innen ausgebildeten Formkontur der Ausnehmung der Gegenform faltenfrei anliegt. Mit anderen Worten bildet die erste Deckschicht die Formkontur der Ausnehmung ab. Die zweite Deckschicht wird ebenfalls derart angeordnet, dass diese an einer Formkontur des Pressbereichs des Pressteils faltenfrei anliegt. Die zweite Deckschicht bildet dabei die Formkontur des Pressbereichs ab.

Bevorzugt werden die beiden Deckschichten ohne mechanische Befestigung, anliegend gehalten. Zum anliegenden Halten der Deckschichten kann jeweils ein Haftmittel, insbesondere Klebstoff, zwischen der Deckschicht und der Formkontur der Gegenform bzw. des Pressbereichs des Pressteils vorgesehen sein.

Bei einer weiteren bevorzugten Ausführungsform des erfindungsgemäßen Verfahrens wird die erste Deckschicht an die Ausnehmung der Gegenform angesaugt und/oder die zweite Deckschicht an den Pressbereich des Pressteils angesaugt, sodass die jeweilige Deckschicht flächig, insbesondere faltenlos anliegt. Konkret wird die erste Deckschicht an die Formkontur der Ausnehmung faltenlos angesaugt und/oder die zweite Deckschicht an die Formkontur des Pressbereichs faltenlos angesaugt. Das Ansaugen der beiden Deckschichten erfolgt bevorzugt durch Unterdruck, der durch wenigstens eine Vakuumanlage aufgebracht wird. Mit anderen Worten werden die beiden Deckschichten mittels Vakuum an die jeweilige Formkontur angesaugt. Dies hat den Vorteil, dass das Anordnen der Deckschichten, die bevorzugt flexible, insbesondere elastische, Kunststofffolien sind, auf einfache Weise erfolgt, ohne das zusätzliche Arbeitsschritte zur Befestigung der Folien erforderlich sind. Das Herstellungsverfahren wird dadurch erheblich vereinfacht. Des Weiteren ist das Anordnen dadurch gut automatisierbar.

Besonders bevorzugt wird die Gegenform zum Bestücken zwischen zwei Betriebsstellungen horizontal bewegt, wobei an der ersten Betriebsstellung die Schritte a) und e) erfolgen und an der zweiten Betriebsstellung Schritt c) erfolgt. Durch den Wechsel der Gegenform von der ersten in die zweite Betriebsstellung wird die Zugänglichkeit der Gegenform zum Einlegen des Kernschichtpakets verbessert. In der zweiten Betriebsstellung ist die Gegenform zu dem Pressteil horizontal versetzt. In der ersten Betriebsstellung befindet sich die Gegenform in der Pressstellung, d.h. dem Pressteil direkt gegenüber. Ein Bestücken der Gegenform in der ersten Betriebsstellung ist daher nur erschwert möglich.

Vorzugsweise wird die erste Deckschicht beim Bewegen der Gegenform von der ersten an die zweite Betriebsstellung mit dem flüssigen Kunststoffmaterial bedeckt, insbesondere besprüht. Mit anderen Worten wird die erste Deckschicht beim horizontalen Verfahren von der ersten an die zweite Betriebsstellung mit dem flüssigen Kunststoffmaterial zeitlich parallel bedeckt. Durch diese parallelen Verfahrensschritte wird die Bestückungszeit zum Bestücken der Gegenform erheblich verkürzt.

Weiter vorzugsweise wird die zweite Faserlage beim Bewegen der Gegenform von der zweiten an die erste Betriebsstellung mit dem flüssigen Kunststoffmaterial bedeckt, insbesondere besprüht. Mit anderen Worten wird die zweite Deckschicht beim horizontalen Verfahren von der zweiten an die erste Betriebsstellung mit dem flüssigen Kunststoffmaterial zeitlich parallel bedeckt. Durch diese parallelen Verfahrensschritte wird die Bestückungszeit zum Bestücken der Gegenform weiter verkürzt.

In Schritt b) kann die erste Deckschicht über die gesamte Breite der Ausnehmung der Gegenform mit dem flüssigen Kunststoffmaterial bedeckt werden. Alternativ oder zusätzlich kann in Schritt d) die zweite Faserlage über die gesamte Breite des Isolierkerns mit dem flüssigen Kunststoffmaterial bedeckt werden. Dies hat den Vorteil, dass eine flächendeckende Benetzung der ersten Deckschicht und/oder der zweiten Faserlage bereits in Schritt b) und d) erfolgt. Dies spart weiter Arbeitsschritte ein, wodurch das Verfahren vereinfacht wird.

Bei einer besonders bevorzugten Ausführungsform des erfindungsgemäßen Verfahrens wird wenigstens eine Entlüftungseinlage zwischen der Gegenform und dem Pressteil angeordnet, wobei beim Pressen die zwischen der Gegenform und dem Pressteil eingeschlossene Luft durch die Entlüftungseinlage solange entweicht, bis das flüssige Kunststoffmaterial die Entlüftungseinlage verschließt. Die Entlüftungseinlage kann konkret zwischen der ersten Deckschicht und dem Pressteil oder der zweiten Deckschicht eingelegt sein. Es ist alternativ möglich, dass die Entlüftungseinlage in wenigstens einem Ausschnitt der ersten Deckschicht zwischen der Gegenform und dem Pressteil oder der zweiten Deckschicht angeordnet ist. Durch die Entlüftungseinlage wird beim Pressen in Schritt e) eine verbesserte Entlüftung ermöglicht und somit der Einschluss von Luftblasen im Isolierpaneel sowie ein Materialverlust durch Rückhaltung verhindert.

Bei einer bevorzugten Ausführungsform des erfindungsgemäßen Verfahrens wird die Entlüftungseinlage an einem Rand der Gegenform angeordnet, der an die Ausnehmung angrenzt. Die Entlüftungseinlage kann in die Ausnehmung der Gegenform ragen. Beim Pressen in Schritt e) verbindet die Entlüftungseinlage die Ausnehmung der Gegenform mit der Außenatmosphäre, sodass eine Entlüftung beim Pressvorgang erfolgen kann.

Bei einer weiteren bevorzugten Ausführungsform des erfindungsgemäßen Verfahrens bilden in Schritt e) die Faserlagen mit dem flüssigen Kunststoffmaterial jeweils eine Zwischenschicht, die die jeweilige Deckschicht und den Isolierkern zur Bildung des Isolierpaneels fest, insbesondere unlösbar, miteinander verbindet.

Bevorzugt wird in Schritt e) der Pressbereich des Pressteils über eine vorbestimmte Zeitspanne, insbesondere Aushärtezeit, gegen die Gegenform gepresst, wobei das flüssige Kunststoffmaterial zur Bildung der Zwischenschicht aushärtet. Beim Aushärten verfestigt sich das Kunststoffmaterial und bindet die Faserlage ein, sodass die Zwischenschicht entsteht.

Weiter bevorzugt wird nach Schritt e) das Pressteil von der Gegenform gelöst, das gebildete Isolierpaneel aus der Gegenform entnommen wird und anschließend die Schritte a) bis e) zur Bildung eines weiteren Isolierpaneels wiederholt werden.

Das erfindungsgemäße Verfahren ist nicht auf die vorstehend genannte Reihenfolge beschränkt. Es ist möglich, dass die erste Faserlage bereits in Schritt a) mit der ersten Deckschicht angeordnet wird. Dabei kann zuerst die erste Deckschicht in der Ausnehmung angeordnet und danach die erste Faserlage in die Ausnehmung auf die erste Deckschicht gelegt werden. Mit anderen Worten wird die erste Faserlage nach dem Einlegen der ersten Deckschicht auf dieser angeordnet. Es ist möglich, dass die erste Deckschicht und die erste Faserlage in der Ausnehmung gemeinsam angeordnet werden. Bei dieser alternativen Variante wird in Schritt c) das Kernschichtpaket mit nur der zweiten Faserlage eingelegt, die dann in Schritt d) mit dem flüssigen Kunststoffmaterial bedeckt wird. Das Kernschichtpaket besteht hier aus der Kernschicht bzw. dem Isolierkern und der zweiten Faserlage.

Zu den weiteren Vorteilen des Verfahrens zur Herstellung eines Isolierpaneels wird auf die im Zusammenhang mit dem Isolierpaneel und der Vorrichtung erläuterten Vorteile verwiesen. Darüber hinaus kann das Verfahren alternativ oder zusätzlich einzelne oder eine Kombination mehrerer zuvor in Bezug auf das Isolierpaneel und die Vorrichtung genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Isolierpaneel und die erfindungsgemäße Vorrichtung ausgestaltet sein können.

In diesen zeigen,
- Fig. 1: einen schematischen Aufbau eines Isolierpaneels in Explosionsdarstellung nach einem bevorzugten erfindungsgemäßen Ausführungsbeispiel;
- Fig. 2: eine Draufsicht auf eine Gegenform einer Vorrichtung nach einem erfindungsgemäßen Ausführungsbeispiel; und
- Fig. 3: einen Querschnitt der Vorrichtung gemäß Fig. 2 entlang einer Schnittlinie A-A.

Im Folgenden werden für gleiche und gleich wirkende Teile dieselben Bezugsziffern verwendet.

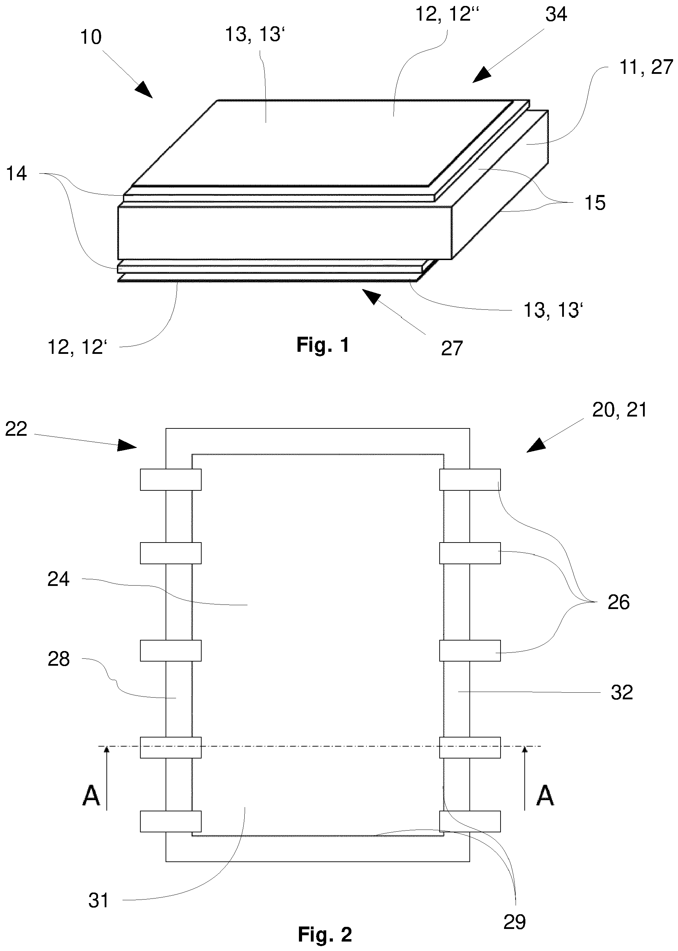

Fig. 1 zeigt einen schematischen Aufbau eines Isolierpaneels 10 für einen Fahrzeugaufbau nach einem erfindungsgemäßen Ausführungsbeispiel. Das Isolierpaneel 10 wird beispielsweise als Wärmedämmplatte bevorzugt im Kühlfahrzeugbau zur Herstellung eines Kühlfahrzeugaufbaus eingesetzt. Das Isolierpaneel dient hierbei in erster Linie als wärmedämmendes Wandelement und/oder als wärmedämmendes Bodenelement und/oder als wärmedämmendes Deckenelement und/oder als wärmedämmendes Türelement. Andere Anwendungen sind möglich.

Das Isolierpaneel 10 weist eine wärmedämmende Kernschicht 11, zwei Deckschichten 12 und zwei Zwischenschichten 14 auf. Gemäß Fig. 1 sind die Deckschichten 12 des Isolierpaneels 10 jeweils als Folie 13 ausgebildet. Die Folien 13 können einseitig, doppelseitig bzw. auf mehreren Seiten der Kernschicht 11 angeordnet sein. Die Folien 13 können die Kernschicht 12 vollständig ummanteln bzw. einkapseln.

Die Deckschichten 12 sind jeweils durch eine Einzelfolie gebildet. Die Einzelfolie kann eine Mehrschichtfolie sein, dessen Schichten unterschiedliche Materialeigenschaften aufweist. Die Mehrschichtfolie besteht bevorzugt aus wenigstens zwei übereinander extrudierten Folienschichten. Es ist alternativ möglich, dass die Deckschichten 12 jeweils durch mehrere aneinander angeordnete Folien 13 gebildet sind. Konkret ist die Folie 13 eine Kunststofffolie, die aus Polyurethan besteht. Nachfolgend werden die Deckschichten 12 jeweils als Kunststofffolie 13' bezeichnet.

Des Weiteren sind die Zwischenschichten 14 gemäß Fig. 1 jeweils aus einer Faserlage in einem ausgehärteten Kunststoffmaterial gebildet. Die Faserlage ist in das ausgehärtete Kunststoffmaterial eingebettet. Die Faserlage besteht aus einer Glaserfasermatte. Die Faserlage kann alternativ aus mehreren aneinander angeordneten Glaserfasermatten gebildet sein.

Das ausgehärtete Kunststoffmaterial ist ausgehärtetes Polyurethan. Die Faserlage bzw. die Glasfasermatte ist in ausgehärtetem Polyurethan eingebettet. Die Zwischenschichten 14 gemäß Fig. 1 bestehen somit jeweils aus einer in ausgehärtetem Polyurethan integrierten Glaserfasermatte. Die Zwischenschichten 14 bilden jeweils eine faserverstärkte, insbesondere glasfaserverstärkte, Schicht. Nachfolgend wird das ausgehärtete Kunststoffmaterial als ausgehärtetes Polyurethan bezeichnet.

Das Isolierpaneel 10 gemäß Fig. 1 ist durch Verpressen der einzelnen Schichten 11, 13', 14 gebildet. Die Kernschicht 11 ist mit den Kunststofffolien 13' durch die Zwischenschichten 14 mittels einer Pressverbindung fest verbunden. Das ausgehärtete Polyurethan dient hier als Verbundstoff, der die Kunststofffolien 13' mit der Kernschicht 11 fest verbindet. Die Verbindung der Kernschicht 11, der Zwischenschichten 14 sowie der Kunststofffolien 13' ist unlösbar. Mit anderen Worten können die einzelnen Schichten 12, 13', 14 nur durch Zerstören der einzelnen Schichten 12, 13', 14 des Isolierpaneels 10 getrennt werden.

Die Zwischenschichten 14 sind jeweils auf der Kernschicht 11 einander gegenüber angeordnet. Die Kunststofffolien 13' sind an den Zwischenschichten 14 einander gegenüber angeordnet. Mit anderen Worten befindet sich die jeweilige Zwischenschicht 14 zwischen der Kernschicht 11 und der Kunststofffolie 13'. Das Isolierpaneel 10 gemäß Fig. 1 ist also als Sandwichpaneel ausgebildet, wobei die einzelnen Schichten 12, 13', 14 von außen nach innen in der Reihenfolge Kunststofffolie 13', Zwischenschicht 14 und Kernschicht 11 angeordnet und miteinander verpresst sind.

Die Kunststofffolien 13' bilden nach außen eine abschließende, insbesondere letzte, Schicht des Isolierpaneels 10. Konkret bilden die Kunststofffolien 13' jeweils ausgehend von einer Seitenfläche 15 der Kernschicht 11 quer zur Seitenfläche 15 nach außen eine letzte Schicht. Die Kunststofffolien 13' sind somit am Isolierpaneel 10 außenliegend angeordnet. Eine Lackierung der Kunststofffolien 13' ist dennoch nicht ausgeschlossen.

Gemäß Fig. 1 kann die Kernschicht 11 aus zusammengesetzten Kernschicht-Volumenelementen, insbesondere geschäumten Kernschichtblöcken, gebildet sein. Mit anderen Worten kann die Kernschicht 11 mehrteilig ausgebildet sein. Alternativ kann die Kernschicht 11 einstückig, insbesondere einteilig, ausgebildet sein. Mit anderen Worten kann die Kernschicht 11 durch ein einziges Kernschicht-Volumenelement gebildet sein.

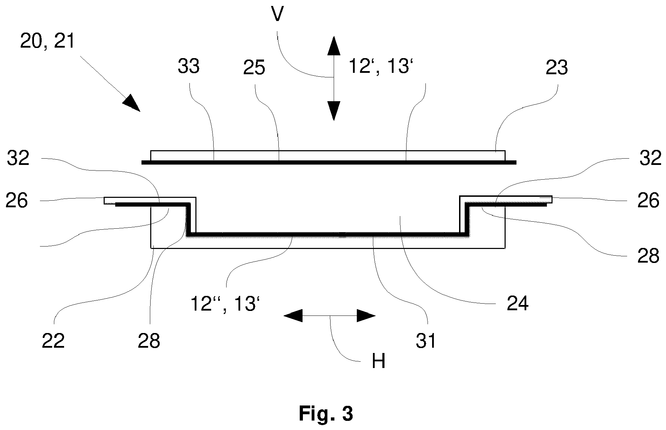

Gemäß den Fig. 2 und 3 ist eine Vorrichtung 20 nach einem erfindungsgemäßen Ausführungsbeispiel gezeigt. Die Vorrichtung 20 dient zur Herstellung eines Isolierpaneels 10 gemäß Fig. 1.

Die Vorrichtung 20 umfasst ein Presswerkzeug 21 mit einem Pressteil 23 und einer Gegenform 22, die in einer horizontalen Richtung H bewegbar ist. Die Gegenform 22 weist eine Ausnehmung 24 auf, die eine Negativform eines zu bildenden Isolierpaneels 10 bildet.

Wie in Fig. 3 gut erkennbar, ist die Ausnehmung 24 wannenförmig ausgebildet. Die Ausnehmung 24 weist eine Umfangsbegrenzungsfläche 29 und eine Seitenwandbegrenzungsfläche 31 auf. Bei dem Pressvorgang zur Bildung des Isolierpaneels 10 begrenzt die Umfangsbegrenzungsfläche 29 die Form des Isolierpaneels 10 umlaufend und die Seitenwandbegrenzungsfläche 31 eine erste Seitenwandform 27 des Isolierpaneels 10. Die Ausnehmung 24 der Gegenform 22 definiert somit die Umfangsform sowie die erste Seitenwandform 27 des zu bildenden Isolierpaneels 10.

Wie in Fig. 2 gezeigt ist, weist die Ausnehmung 24 der Gegenform 22 in der Draufsicht eine rechteckige Form auf. Die Gegenform 22 weist ferner einen Rand 28 auf, der an die Ausnehmung 24 angrenzend ausgebildet ist. Der Rand 28 ist die Ausnehmung 24 umlaufend ausgebildet. Der Rand 28 weist eine Anpressfläche 32 auf, an die das Pressteil 23 beim Pressvorgang gegen die Gegenform 22 gepresst wird. Die Anpressfläche 32 umläuft die Ausnehmung 24.

Fig. 2 zeigt ferner mehrere Entlüftungseinlagen 26, die am Umfang der Ausnehmung 24 verteilt angeordnet sind. Die Entlüftungseinlagen 26 sind streifenförmig ausgebildet und verbinden beim Pressvorgang, d.h. im geschlossenen Zustand des Presswerkzeugs 21, die Ausnehmung 24 mit der Außenatmosphäre. Die Entlüftungseinlagen 26 sind luftdurchlässig ausgebildet. Ferner sind die Entlüftungseinlagen 26 flüssigkeitsabdichtend ausgebildet. Gemäß den Fig. 2 und 3 sind die Entlüftungseinlagen 26 jeweils durch eine Weichschaumeinlage gebildet.

Durch die Entlüftungseinlagen 26 wird die im Presswerkzeug 21 beim Pressvorgang eingeschlossene Luft abgeführt, sodass keine unerwünschten Lufteinschlüsse in dem Isolierpaneel 10 entstehen.

Bei der Vorrichtung 20 gemäß Fig. 2 sind die Entlüftungseinlagen 26 jeweils an einer Längsseite der Gegenform 22 angeordnet. Konkret sind die Entlüftungseinlagen 26 auf der Anpressfläche 32 der Gegenform 22 angeordnet und ragen in die Ausnehmung 24. Dabei liegen die Entlüftungseinlagen 26 an der Umfangsbegrenzungsfläche 29 der Ausnehmung 24 an. Die Entlüftungseinlagen 26 sind gleichmäßig verteilt angeordnet. Konkret sind die Entlüftungseinlagen 26 um eine mittige (gedachte) Ebene der Gegenform 22 spiegelsymmetrisch angeordnet.

Fig. 3 zeigt die Gegenform 22 in einer ersten Betriebsstellung, in der die Gegenform 22 dem Pressteil 23 gegenüber angeordnet ist. In Einbaulage ist die Gegenform 22 unterhalb des Pressteils 23 angeordnet. Das Pressteil 23 ist in der vertikalen Richtung V bewegbar und horizontal an einer festen Position angeordnet. Die Gegenform 22 ist gegenüber dem Pressteil 23 in horizontaler Richtung relativ verschiebbar. Die vertikale Richtung V entspricht einer Richtung, in die das Pressteil im Betrieb zum Pressen und Lösen bewegt wird. Die horizontale Richtung H steht zur vertikalen Richtung V orthogonal.

Die Vorrichtung 20 umfasst eine zweite Betriebsstellung, an die die Gegenform 22 zur Bestückung bewegt wird. An der zweiten Betriebsstellung ist die Gegenform 22 zu dem Pressteil 23 horizontal versetzt.

Der Pressteil 23 des Presswerkzeugs 21 weist einen Pressbereich 25 auf, der der Ausnehmung 24 zugewandt ist. Der Pressbereich 25 bildet eine Pressfläche 33, die eine zweite Seitenwandform 34 des zu bildenden Isolierpaneels 10 definiert. Im geschlossenen Zustand des Presswerkzeugs 21 presst der Pressteil 23 die Pressfläche 33 an die Anpressfläche 32 der Gegenform 22.

Im Folgenden wird ein Verfahren zur Herstellung des Isolierpaneels gemäß Fig. 1 unter Verwendung der Vorrichtung gemäß Fig. 2 und 3 beschrieben. Zu Beginn befindet sich die Gegenform 22 des Presswerkszeugs 21 in der ersten Betriebsstellung, d.h. direkt gegenüber dem Pressteil 23. Das Pressteil 23 ist von der Gegenform 22 gelöst und die Ausnehmung 24 der Gegenform 24 ist leer.

In einem ersten Verfahrensschritt wird eine erste Kunststofffolie 13' als erste Deckschicht 12' in der Ausnehmung 24 der Gegenform 22 angeordnet. Die erste Kunststofffolie 13' wird an eine innen liegende Formkontur der Ausnehmung 24 angesaugt, sodass die erste Kunststofffolie 13' an der Formkontur faltenfrei anliegt. Eine zweite Kunststofffolie 13' wird als zweite Deckschicht 12" an dem Pressbereich 25 des Pressteils 23 angeordnet. Die zweite Kunststofffolie 13' wird an den Pressbereich 25 angesaugt, sodass die zweite Kunststofffolie 13' an dem Pressbereich 25 faltenfrei anliegt. Die Anordnung der zweiten Kunststofffolie 13' an dem Pressbereich 25 des Pressteils 23 kann auch zu einem anderen Zeitpunkt durchgeführt werden, muss aber vor dem Verpressen der Schichten erfolgen.

Als nächstes wird die Gegenform 22 von der ersten Betriebsstellung in die zweite Betriebsstellung bewegt, wobei beim Verfahren der Gegenform 22 die erste Kunststofffolie 13' mit flüssigem Polyurethan bedeckt wird. Konkret wird die erste Kunststofffolie 13' beim Verfahren über die gesamte Breite mit flüssigem Polyurethan bedeckt.

Anschließend wird ein Kernschichtpaket, bestehend aus einem wärmedämmenden Kernschicht 11 und zwei an der Kernschicht 11 vorab angeordneten Glasfasermatten in die Ausnehmung 24 eingelegt. Dabei kommt eine erste, insbesondere untenliegende, der beiden Glasfasermatten mit dem bereits eingebrachten flüssigen Polyurethan in Kontakt.

Nach dem Bestücken der Gegenform 22 mit dem Kernschichtpaket wird die Gegenform 22 wieder von der zweiten Betriebsstellung in die erste Betriebsstellung bewegt, wobei eine zweite, insbesondere obenliegende, der beiden Glasfasermatten beim Verfahren mit dem flüssigen Polyurethan bedeckt wird. Die zweite Glasfasermatte wird über die gesamte Breite des Kernschichtpakets mit dem flüssigen Polyurethan bedeckt.

Vor dem Pressvorgang werden mehrere Entlüftungseinlagen 26 an dem Rand 28 der Gegenform 25 angeordnet, die wie in Fig. 2 und 3 beschrieben eine Entlüftung des geschlossenen Presswerkzeugs 21 beim Pressvorgang ermöglichen.

In der ersten Betriebsstellung erfolgt nun der Pressvorgang. Es bewegt sich das Pressteil 23 in vertikaler Richtung V zur Gegenform 22 und presst den Pressbereich 25 bzw. die Pressfläche 33 gegen die Anpressfläche 32 der Gegenform 22 derart, sodass das Kernschichtpaket mit dem flüssigen Polyurethan und den beiden Kunststofffolien 13' verpresst wird. Durch das Zusammenpressen der einzelnen Schichten 11, 13' sowie des flüssigen Polyurethans wird die eingeschlossene Luft verdrängt und durch die Entlüftungseinlagen 26 nach außen abgeführt. Die Entlüftung erfolgt solange, bis das flüssige Polyurethan die Entlüftungseinlagen 26 in der Ausnehmung 24 verstopft und somit abdichtet.

Das Pressteil 23 übt solange einen Anpressdruck aus, bis eine vorbestimmte Aushärtedauer zum Aushärten des flüssigen Polyurethans erreicht wird. Danach wird das Pressteil 23 in entgegengesetzter vertikaler Richtung V bewegt und somit das Presswerkzeug 21 geöffnet. Das Isolierpaneel 10 ist nun fertig ausgebildet, wobei die Zwischenschichten 14 durch das ausgehärtete Polyurethan mit den eingebetteten Glasfasermatten gebildet sind. Die beiden Kunststofffolien 13' sind durch die gebildete Zwischenschicht 14 mit der Kernschicht 11 unlösbar verbunden.

### Bezugszeichenliste

- 10: Isolierpaneel
- 11: Kernschicht
- 12: Deckschichten
- 12': erste Deckschicht
- 12": zweite Deckschicht
- 13: Folie
- 13': Kunststofffolie
- 14: Zwischenschichten
- 15: Seitenfläche der Kernschicht
- 20: Vorrichtung
- 21: Presswerkzeug
- 22: Gegenform
- 23: Pressteil
- 24: Ausnehmung
- 25: Pressbereich
- 26: Entlüftungseinlage
- 27: erste Seitenwandform
- 28: Rand
- 29: Umfangsbegrenzungsfläche
- 31: Seitenwandbegrenzungsfläche
- 32: Anpressfläche
- 33: Pressfläche
- 34: zweite Seitenwandform
- H: horizontale Richtung
- V: vertikale Richtung

## Patentansprüche

1. Isolierpaneel (10) für einen Fahrzeugaufbau, insbesondere Kühlfahrzeugaufbau, mit wenigstens einer wärmedämmenden, insbesondere geschäumten, Kernschicht (11), wenigstens zwei Deckschichten (12) aus jeweils wenigstens einer Folie (13), insbesondere Kunststofffolie (13'), und wenigstens zwei Zwischenschichten (14), die jeweils durch wenigstens eine Faserlage in einem ausgehärteten Kunststoffmaterial gebildet sind, wobei die Zwischenschichten (14) jeweils zwischen der wärmedämmenden Kernschicht (11) und der jeweiligen Deckschicht (12) einander gegenüber angeordnet sind,
**dadurch gekennzeichnet, dass**
die Zwischenschichten (14) die Kernschicht (11) mit den Deckschichten (12) durch eine Pressverbindung fest, insbesondere unlösbar verbindet.

2. Isolierpaneel nach Anspruch 1,
**dadurch gekennzeichnet, dass**
die Faserlage in das ausgehärtete Kunststoffmaterial durch Verpressen der einzelnen Schichten (11, 12, 14) eingebettet ist und/oder die Faserlage durch wenigstens eine Glasfasermatte gebildet ist und/oder das ausgehärtete Kunststoffmaterial aus Polyurethan gebildet ist.

3. Isolierpaneel nach Anspruch 1 oder 2,
**dadurch gekennzeichnet, dass**
die Deckschichten (12) jeweils durch wenigstens eine Mehrschichtfolie gebildet sind, wobei die einzelnen Schichten der Mehrschichtfolie unterschiedliche Eigenschaften aufweisen und/oder die Deckschichten (12) jeweils ausgehend von der wärmedämmenden Kernschicht (11) nach außen, insbesondere quer zu einer Seitenfläche (15) der Kernschicht (11), eine abschließende, insbesondere letzte, Schicht des Isolierpaneels bilden.

4. Vorrichtung (20) zur Herstellung eines Isolierpaneels (10), die wenigstens ein Presswerkzeug (21) mit wenigstens einer Gegenform (22) und wenigstens einem Pressteil (23) umfasst, wobei die Gegenform (22) wenigstens eine Ausnehmung (24) zur Bildung des Isolierpaneels und das Pressteil (23) wenigstens einen Pressbereich (25) aufweist, der in einer ersten von wenigstens zwei Betriebsstellungen der Ausnehmung (24) gegenüber angeordnet ist, wobei die Gegenform (22) zwischen den beiden Betriebsstellungen horizontal bewegbar ist, um die Ausnehmung (24) der Gegenform (22) schichtweise zu bestücken, und das Pressteil (23) vertikal bewegbar ist, um das Pressteil (23) zur Bildung des Isolierpaneels gegen die Gegenform (22) zu pressen.

5. Vorrichtung nach Anspruch 4,
**dadurch gekennzeichnet, dass**
das Presswerkzeug (21) wenigstens ein Gegenstück aufweist, das als feststehendes Widerlager für die Gegenform (22) ausgebildet ist und beim Pressvorgang die durch das Pressteil (23) in die Gegenform (22) eingeleiteten Presskräfte aufnimmt und/oder die Ausnehmung (24) der Gegenform (22) wannenförmig ausgebildet ist und eine Negativform des zu bildenden Isolierpaneels bildet.

6. Vorrichtung nach Anspruch 4 oder 5,
**gekennzeichnet durch**,
wenigstens eine Verteileinrichtung zum Aufbringen eines flüssigen Kunststoffmaterials, insbesondere Polyurethan, die in horizontaler Richtung zwischen den beiden Betriebsstellungen der Gegenform (22) angeordnet ist.

7. Vorrichtung nach einem der Ansprüche 4 bis 6,
**gekennzeichnet durch**,
wenigstens eine Entlüftungseinlage (26) zum Abführen der beim Pressvorgang zwischen der Gegenform (22) und dem Pressteil (23) eingeschlossenen Luft, wobei die Entlüftungseinlage (26) an einem an die Ausnehmung (24) angrenzenden Rand (28) der Gegenform (22) angeordnet ist, insbesondere ist die Entlüftungseinlage (26) an dem Rand (28) die Ausnehmung (24) vollständig umlaufend angeordnet oder es sind mehrere Entlüftungseinlagen (26) vorgesehen, die am Umfang der Ausnehmung (24) verteilt angeordnet sind.

8. Verfahren zur Herstellung eines Isolierpaneels (10) mit einer Vorrichtung (20), die ein Presswerkzeug (21) mit wenigstens einer Gegenform (22) und wenigstens einem Pressteil (23) umfasst, wobei die Gegenform (22) wenigstens eine Ausnehmung (24) zur Bildung des Isolierpaneels aufweist, und das Verfahren folgende Schritte umfasst:
a) Anordnen wenigstens einer ersten Deckschicht (12'), insbesondere einer Folie (13), in der Ausnehmung (24) der Gegenform (22) und Anordnen wenigstens einer zweiten Deckschicht (12"), insbesondere einer Folie (13), an einem der Ausnehmung (24) zugewandten Pressbereich (25) des Pressteils (23);
b) Bedecken der ersten Deckschicht (12') mit wenigstens einem flüssigen Kunststoffmaterial, insbesondere Polyurethan;
c) Einlegen wenigstens eines Kernschichtpakets aus einem Isolierkern (27) mit beidseitig angeordneten Faserlagen in die Ausnehmung (24) der Gegenform (22), sodass wenigstens die erste der beiden Faserlagen mit dem flüssigen Kunststoffmaterial in Kontakt steht;
d) Bedecken der zweiten der beiden Faserlagen mit dem flüssigen Kunststoffmaterial, insbesondere Polyurethan; und
e) Pressen des Pressteils (23) mit dem Pressbereich (25) gegen die Gegenform (22), wobei das Kernschichtpaket mit dem flüssigen Kunststoffmaterial und den beiden Deckschichten (12', 12") zur Bildung des Isolierpaneels verpresst wird.

9. Verfahren nach Anspruch 8,
**dadurch gekennzeichnet, dass**
in Schritt a) die erste Deckschicht (12') an der Ausnehmung (24) der Gegenform (22) anliegend gehalten, insbesondere angesaugt, wird und/oder in Schritt a) die zweite Deckschicht (12") an dem Pressbereich (25) des Pressteils (23) anliegend gehalten, insbesondere angesaugt, wird, sodass vorzugsweise die jeweilige Deckschicht (12', 12") flächig, insbesondere faltenlos anliegt.

10. Verfahren nach Anspruch 8 oder 9,
**dadurch gekennzeichnet, dass**
die Gegenform (22) zum Bestücken zwischen zwei Betriebsstellungen horizontal bewegt wird, wobei an der ersten Betriebsstellung die Schritte a) und e) erfolgen und an der zweiten Betriebsstellung Schritt c) erfolgt.

11. Verfahren nach einem der Ansprüche 8 bis 10,
**dadurch gekennzeichnet, dass**
die erste Deckschicht (12') beim Bewegen der Gegenform (22) von der ersten an die zweite Betriebsstellung mit dem flüssigen Kunststoffmaterial bedeckt, insbesondere besprüht wird und/oder die zweite Faserlage beim Bewegen der Gegenform (22) von der zweiten an die erste Betriebsstellung mit dem flüssigen Kunststoffmaterial bedeckt, insbesondere besprüht wird.

12. Verfahren nach einem der Ansprüche 8 bis 11,
**dadurch gekennzeichnet, dass**
in Schritt b) die erste Deckschicht (12') über die gesamte Breite der Ausnehmung (24) der Gegenform (22) mit dem flüssigen Kunststoffmaterial bedeckt wird und/oder in Schritt d) die zweite Faserlage über die gesamte Breite des Isolierkerns (27) mit dem flüssigen Kunststoffmaterial bedeckt wird.

13. Verfahren nach einem der Ansprüche 8 bis 12,
**dadurch gekennzeichnet, dass**
wenigstens eine Entlüftungseinlage (26) zwischen der Gegenform (22) und dem Pressteil (23) angeordnet wird, wobei beim Pressen die zwischen der Gegenform (22) und dem Pressteil (23) eingeschlossene Luft durch die Entlüftungseinlage (26) solange entweicht, bis das flüssige Kunststoffmaterial die Entlüftungseinlage (26) verschließt, wobei insbesondere die Entlüftungseinlage (26) an einem Rand (28) der Gegenform (22) angeordnet wird, der an die Ausnehmung (24) angrenzt, wobei die Entlüftungseinlage (26) in die Ausnehmung (24) der Gegenform (22) ragt.

14. Verfahren nach einem der Ansprüche 8 bis 13,
**dadurch gekennzeichnet, dass**
in Schritt e) die Faserlagen mit dem flüssigen Kunststoffmaterial jeweils eine Zwischenschicht (14) bilden, die die jeweilige Deckschicht (12', 12") und den Isolierkern (27) zur Bildung des Isolierpaneels fest, insbesondere unlösbar, miteinander verbindet und/oder in Schritt e) der Pressbereich (25) des Pressteils (23) über eine vorbestimmte Zeitspanne, insbesondere Aushärtezeit, gegen die Gegenform (22) gepresst wird, wobei das flüssige Kunststoffmaterial zur Bildung der Zwischenschicht (14) aushärtet..

15. Verfahren nach einem der Ansprüche 8 bis 14,
**dadurch gekennzeichnet, dass**
nach Schritt e) das Pressteil (23) von der Gegenform (22) gelöst wird, das gebildete Isolierpaneel aus der Gegenform (22) entnommen wird und anschließend die Schritte a) bis e) zur Bildung eines weiteren Isolierpaneels wiederholt werden.
